# FASCICULE DE BREVET EUROPEEN

(11) **EP 2 892 693 B1**
(45) Date de publication et mention de la délivrance du brevet: **31.10.2018**
(21) Numéro de dépôt: 13759520.3
(22) Date de dépôt: 09.09.2013
(51) Int. Cl.: B25J 5/02, B25J 9/00, B05B 13/02, B05B 13/04, B25J 11/00

(54) **INSTALLATION DE PROJECTION DE PRODUIT DE REVETEMENT**
ANLAGE ZUM AUFSPRÜHEN EINES BESCHICHTUNGSMITTELS
FACILITY FOR SPRAYING A COATING MATERIAL

(30) Priorité: 10.09.2012 FR 1258466
(43) Date de publication de la demande: 15.07.2015
(73) Titulaire: SAMES KREMLIN, 38240 Meylan (FR)
(72) Inventeur: LETARD, François, F-38660 La Terrasse (FR); BALLU, Patrick, F-51100 Reims (FR)
(74) Mandataire: Lavoix
(86) Numéro de dépôt international: PCT/EP2013/068616
(87) Numéro de publication internationale: WO 2014/037562

(56) Documents cités:
- EP-A1- 1 749 584
- WO-A2-2005/046880
- JP-A- H06 312 385
- JP-U- H0 344 576
- US-A1- 2008 060 575

## Description

L'invention a trait à une installation de projection de produit de revêtement sur des objets, tels que des carrosseries de véhicules automobiles, déplacés par un convoyeur.

Dans le domaine de l'industrie automobile, il est connu d'utiliser des robots multiaxes pour appliquer un revêtement tel qu'un après, une peinture ou un vernis sur la carrosserie d'un véhicule automobile déplacé par un convoyeur de type à vitesse constante ou de type avec arrêts (« stop and go »).

Les carrosseries de véhicules automobiles comprennent généralement une caisse qui constitue une partie fixe, ainsi que des ouvrants, tels que des portes, un capot, un panneau de coffre ou un hayon. Pour accéder à l'intérieur de l'habitacle, du compartiment moteur ou du coffre afin d'en revêtir certaines surfaces, il est nécessaire de manipuler ces ouvrants, notamment pour ménager un passage pour un projecteur de produit de revêtement.

Il est ainsi connu de WO-A-2005/046880 d'utiliser un robot de peinture coulissant le long d'un premier rail et des robots d'ouverture de portes et de capots coulissant le long d'un deuxième rail installé en partie basse d'une cloison latérale d'une cabine de peinture. L'utilisation de deux rails superposés pour permettre le coulissement, d'une part, du robot de peinture et, d'autre part, des robots de manipulation complexifie et renchérit l'installation connue. En outre, le deuxième rail, le long duquel coulissent les robots de manipulation, limite l'accès à la cabine à travers la cloison qu'il longe. Les robots de manipulation disposés globalement en-dessous du robot de peinture sont susceptibles de recevoir la peinture en excès ou « overspray » qui, une fois projetée par le robot de projection, ne se dépose pas directement sur la carrosserie. En d'autres termes, les robots de manipulation sont rapidement salis par la peinture en excès. Enfin, dans le cas où le robot de projection utilise une boite de rinçage et/ou une station de nettoyage/remplissage, comme le pulvérisateur équipé d'un réservoir envisagé dans EP-A-0 274 322, l'encombrement du deuxième rail de support des robots de manipulation impose de positionner la boite de rinçage et/ou la station de nettoyage/remplissage au-delà de ce deuxième rail, selon une direction globalement parallèle à la direction d'avance des véhicules. Ceci induit des mouvements de grande amplitude du robot de projection, à la fin de chaque cycle de peinturage.

Par ailleurs, US-A-2008/0060575, qui révèle les caractéristiques du préambule, prévoit de monter des robots de peinturage et des robots manipulateurs par série de deux, sur deux rails parallèles et sans possibilité de se croiser, ce qui induit les mêmes inconvénients que ceux mentionnés ci-dessus.

Des problèmes analogues se posent dans d'autres installations de projection de produit de revêtement sur des objets déplacés par un convoyeur, lorsque ces objets comportent une partie de base et au moins une partie mobile devant être déplacée par un robot de manipulation.

C'est à ces inconvénients qu'entend plus particulièrement remédier l'invention en proposant une nouvelle installation de projection de produit de revêtement qui permet d'appliquer efficacement un produit de revêtement sur un objet comprenant une partie de base et une partie mobile, sans limiter sensiblement l'accès à la cabine, en évitant, dans une large mesure, les salissures et, le cas échéant sans imposer de longs mouvements longitudinaux à un robot de projection.

A cet effet, l'invention concerne une installation de projection de produit de revêtement sur des objets, tels que des carrosseries de véhicules automobiles, déplacés par un convoyeur parallèlement à un axe de convoyage et comprenant au moins une partie de base et une partie mobile par rapport à la partie de base. Cette installation comprend au moins un premier robot de projection multiaxe, dédié à la projection de produit de revêtement et comprenant un chariot ainsi qu'un bras polyarticulé, articulé sur ce chariot par une extrémité proximale et dont l'extrémité opposée au chariot supporte un projecteur de produit de revêtement, ainsi qu'au moins un robot manipulateur multiaxe, dédié à la manoeuvre d'une partie mobile d'un objet à revêtir par rapport à sa partie de base et comprenant un chariot ainsi qu'un bras polyarticulé, articulé sur ce chariot par une extrémité proximale et dont l'extrémité opposée au chariot supporte un organe de manipulation, chaque robot étant mobile parallèlement à l'axe de convoyage. Cette installation comprend également une cabine, ainsi que des moyens de ventilation qui assurent un écoulement d'air de ventilation à l'intérieur de la cabine, selon une direction perpendiculaire à l'axe de convoyage. Conformément à l'invention, les chariots des deux robots de projection et manipulateur sont montés coulissants le long d'un même rail parallèle à l'axe de convoyage, avec possibilité de se croiser, alors que ce rail est disposé en amont des objets à revêtir, selon la direction de l'écoulement d'air de ventilation et alors que les deux chariots sont montés sur deux côtés opposés ou adjacents du rail.

Grâce à l'invention, le montage, sur un même rail, du robot de projection et du robot manipulateur permet de disposer ces robots dans une zone qui ne gêne pas l'accès à la cabine. Comme le rail est en amont des objets à revêtir, les particules de revêtement en excès ou overspray sont éloignées du rail par l'écoulement d'air de ventilation et, dans une large mesure, des robots, ce qui limite les salissures de ce rail et de ces robots. Enfin, dans le cas où le robot de projection utilise une boite de rinçage et/ou une station de nettoyage/remplissage, cette boite de rinçage et/ou cette station de nettoyage/remplissage peuvent être disposées au voisinage des carrosseries à revêtir, puisque la face intérieure des panneaux latéraux de la cabine de projection n'est pas encombrée par un rail dédié au robot manipulateur.

Selon des aspects avantageux mais non obligatoires de l'invention, une telle installation peut incorporer une ou plusieurs des caractéristiques suivantes, prises dans toute combinaison techniquement admissible :
- L'écoulement d'air de ventilation dans la cabine est vertical et descendant, alors que le rail est disposé au-dessus des objets à revêtir.
- Le rail est à section polygonale et chaque chariot coulisse le long d'au moins une face de ce rail.
- Le rail est à section carrée ou rectangulaire et les chariots coulissent sur deux côtés opposés du rail.
- Le rail est à section en U ou en C et un premier chariot appartenant à l'un des robots coulisse le long d'au moins une face interne du rail, alors qu'un deuxième chariot appartenant à l'autre robot coulisse le long d'au moins une face externe du rail.
- L'un au moins des chariots coulisse le long d'au moins deux faces adjacentes du rail.
- Le rail comprend au moins une face le long de laquelle coulissent une partie du chariot du robot de projection et une partie du chariot du robot manipulateur.
- Chaque chariot est entraîné en déplacement le long du rail par un moteur équipé d'un pignon engrenant sur une crémaillère. En variante, chaque chariot peut être entraîné en déplacement le long du rail par un système de transmission à courroie, à chaîne ou à câble.

L'invention sera mieux comprise et d'autres avantages de celle-ci apparaîtront plus clairement à la lumière de la description qui va suivre de quatre modes de réalisation d'une installation conforme à son principe, donnée uniquement à titre d'exemple et faite en référence aux dessins annexés, dans lesquels :
- la figure 1 est une représentation schématique en perspective d'une installation de revêtement conforme à l'invention ;
- la figure 2 est une vue dans le sens de la flèche II à la figure 1 ;
- la figure 3 est une vue analogue au détail III à la figure 2 pour une installation conforme à un deuxième mode de réalisation ;
- la figure 4 est une vue analogue à la figure 3 pour une installation conforme à un troisième mode de réalisation de l'invention et
- la figure 5 est une vue analogue à la figure 3 pour une installation conforme à un quatrième mode de réalisation de l'invention.

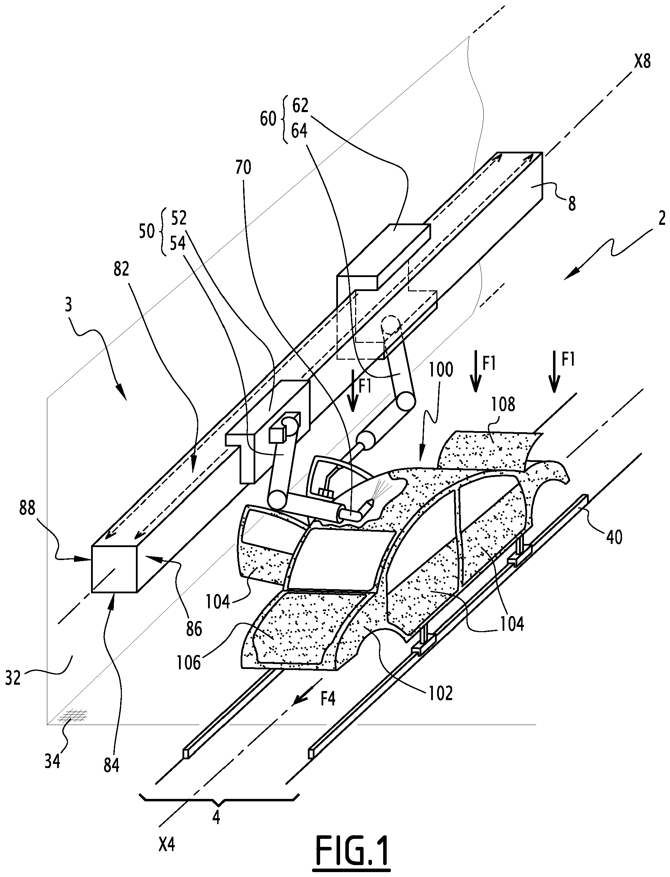

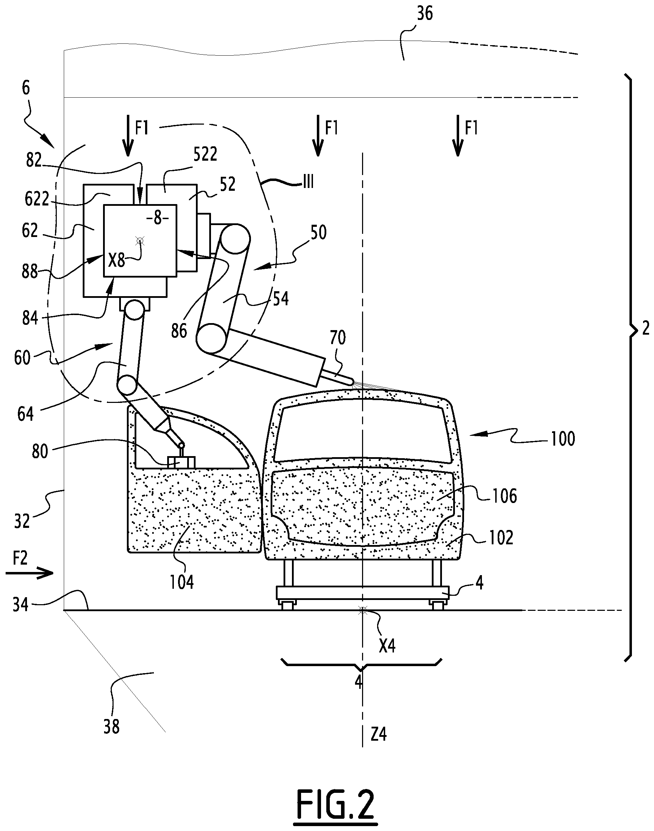

L'installation 2 représentée sur les figures 1 et 2 est destinée à l'application de peinture sur des carrosseries 100 de véhicules automobiles déplacés par un convoyeur 4 parallèlement à un axe de convoyage horizontal X4.

Le convoyeur 4 fonctionne à vitesse constante, de sorte que les carrosseries sont peintes au défilé. En variante, le convoyeur peut effectuer des arrêts, au cours desquels ont lieu les phases de projection. On parle alors d'un convoyeur de type « stop and go ». A la figure 1, la flèche F4 représente la direction d'avance des carrosseries 100, le long de l'axe X4.

Chaque carrosserie 100 comprend une caisse 102, quatre portes 104, un capot 106 et un panneau de coffre 108. Les parties 104, 106 et 108 constituent des ouvrants de la carrosserie 100. Pour la clarté du dessin, la carrosserie 100 est représentée de façon très schématique aux figures 1 et 2. En particulier, le volume intérieur de cette carrosserie n'est pas représenté.

L'installation 2 comprend également une cabine 3 à l'intérieur de laquelle circulent les carrosseries 100 déplacées par le convoyeur 4, au moyen de chariots 40 formant chacun un support de carrosserie. La cabine 3 comprend deux cloisons latérales dont l'une est visible sur les figures avec la référence 32, ainsi qu'un plancher 34 formé par un caillebotis, comme représenté, de façon très schématique et partielle, à la figure 1.

Sur les figures 1 et 2, la cloison opposée à la cloison 32 visible sur la gauche de la figure 2 n'est pas représentée, par souci de simplification.

La cabine 3 comprend également un plénum de ventilation 36 disposé au-dessus des carrosseries 100 et du convoyeur 4. Ce plenum 36 comprend des moyens de ventilation non représentés et connus en soi, notamment des ventilateurs, qui permettent d'établir un flux d'air F1 descendant et vertical à l'intérieur de la cabine 6. Le flux d'air F1 est perpendiculaire à l'axe X4 et traverse ainsi la cabine de haut en bas, du plenum 36 vers une zone 38 située en-dessous du plancher 34 et destinée à la collecte de la peinture en excès ou overspray qui, bien que projetée dans la cabine, ne s'est pas déposée sur une carrosserie 100.

L'installation 2 comprend également un rail 8 disposé à l'intérieur de la cabine 3 et dont un axe longitudinal et central X8 est parallèle à l'axe X4. Le rail 8 est à section carrée et supporte deux robots 50 et 60 dédiés respectivement à la projection de produit de revêtement sur les carrosseries 100 et à la manipulation des ouvrants 104, 106 et 108.

Le robot 50 comprend un chariot 52 équipé d'un moteur électrique non représenté dont l'arbre de sortie entraîne un pignon en prise avec une crémaillère montée dans le rail 8. Ainsi, l'actionnement du moteur électrique permet de déplacer le chariot 52 le long du rail 8, parallèlement à l'axe X8 et dans les deux sens.

On note respectivement 82 et 84 les faces supérieure et inférieure du rail 8. On note respectivement 86 et 88 ses faces gauche et droite, ces faces étant déterminées avec la même orientation que les côtés gauche et droit d'une carrosserie 100 se déplaçant parallèlement à l'axe X4, dans le sens de la flèche F4 à la figure 1.

Le chariot 52 se déplace le long des faces 82 et 86 du rail 8 qu'il recouvre partiellement.

Un bras polyarticulé 54 est articulé par une extrémité proximale sur le chariot 52 et supporte, à son extrémité distale, un projecteur 70 de produit de revêtement de type électrostatique. Selon un aspect optionnel de l'invention qui n'est pas représenté, ce projecteur 70 peut incorporer un réservoir de stockage temporaire de produit de revêtement, conformément à l'enseignement technique de EP-A-0 274 322.

En variante, le projecteur peut ne pas être électrostatique.

Ainsi, le robot 50 permet de déplacer le projecteur 70 en regard de la carrosserie 100, pour appliquer sur celle-ci une couche de produit de revêtement.

Le robot manipulateur 60 comprend un chariot 62 coulissant parallèlement à l'axe X8 le long du rail 8 et qui présente une section transversale à l'axe X8 globalement en forme de U à fond plat. Le chariot 62 recouvre ainsi partiellement les faces 82, 84 et 88 du rail 8.

On note respectivement 522 et 622 les parties des chariots 52 et 62 qui viennent en recouvrement partiel de la face 82 du rail 8. Ces parties 522 et 622 présentent une longueur, mesurée perpendiculairement à l'axe X8 et parallèlement à la face 82, inférieure à la moitié de la largeur de la face 82, de telle sorte que les chariots 52 et 62 n'interfèrent pas lorsqu'ils doivent se croiser, par exemple du fait de mouvements en sens inverse le long du rail 8.

Ainsi, les robots 50 et 60 sont montés coulissants le long du rail 8, avec possibilité de se croiser.

Le robot manipulateur 60 comprend également un bras polyarticulé 64 articulé sur le chariot 62 par une extrémité proximale et dont l'extrémité distale porte un outil 80 qui permet de manipuler un ouvrant d'une carrosserie 100, tel qu'une porte 104 dans la configuration des figures 1 et 2.

Le rail 8 est disposé au-dessus d'une carrosserie 100 en place sur le convoyeur 4 dans la cabine 6. En d'autres termes, en considérant un axe Z4 vertical et sécant avec l'axe X4, le rail 8 est disposé, le long de l'axe Z4, avant une carrosserie 4, dans le sens de l'écoulement d'air de ventilation représenté par les flèches F1.

Ainsi, les particules de produit de revêtement, qu'il s'agisse de produit de revêtement liquide ou pulvérulent, qui ne se déposent pas sur la carrosserie 100, sont entraînées par l'écoulement d'air de ventilation représenté par les flèches F1 à l'opposé du rail 8, ce qui limite les risques de pollution par le produit de revêtement de ce rail, des chariots 52 et 62 et des parties proximales des bras 64 et 54.

Le fait que le rail 8 est au-dessus des carrosseries 100 signifie que sa face 84 s'étend à une distance verticale, mesurée parallèlement à l'axe Z4, du plancher 34 qui est strictement supérieure à la distance verticale maximale entre le plancher 34 et le pavillon d'une carrosserie 100 en place sur le convoyeur 4 dans la cabine 3.

Dans l'exemple des figures, le rail 8 est disposé plus près de la cloison 32 que l'axe Z4. En variante, le rail 8 peut être aligné avec l'axe Z4. Selon une autre variante, le rail 8 peut être plus près de la cloison latérale non représentée sur les figures que de la cloison 32.

En outre, dans la mesure où le rail 8 est situé à une hauteur relativement importante, en pratique supérieure à deux mètres, par rapport au plancher 34, il est possible de prévoir un accès à l'intérieur de la cabine 6 à travers la cloison 62, dans le sens de la flèche F2 à la figure 2, en dessous du rail 8. En effet, aucun rail disposé en partie basse de la cloison 32 ne gêne l'accès au volume intérieur de la cabine 6.

Par ailleurs, si, comme envisagé ci-dessus, dans le cas où le robot de projection utilise une boite de rinçage et/ou une station de nettoyage/remplissage, il est possible de disposer la boite de rinçage et/ou la station de nettoyage/remplissage, au voisinage de la carrosserie 100 dans la configuration des figures 1 et 2 et le long de la paroi 62.

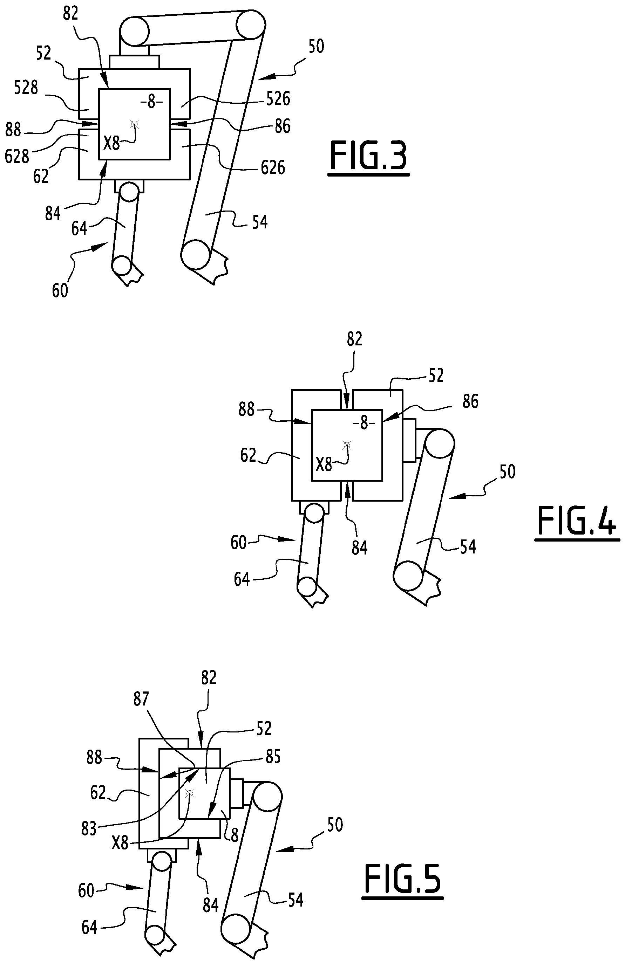

Dans les deuxième et troisième modes de réalisation de l'invention représentés aux figures 3 et 4, les éléments analogues à ceux du premier mode de réalisation portent les mêmes références. Dans ce qui suit, on ne décrit que ce qui distingue ces deuxième et troisième modes de réalisation du premier

Dans le deuxième mode de réalisation, les chariots 52 et 62 des robots 50 et 60 ont chacun une section, transversale et perpendiculaire à l'axe X8 du rail 8, en forme de U à fond plat.

Le chariot 52 du robot de projection 50 est en recouvrement partiel de la face supérieure 82 et des faces latérales 86 et 88 du rail 8, alors que le chariot 62 du robot manipulateur 60 est également à section transversale en U à fond plat, tout en étant en recouvrement de la face inférieure 84 et des faces latérales 86 et 88 du rail 8. On note respectivement 526 et 528 les parties du chariot 52 qui viennent en recouvrement des surfaces 86 et 88. On note respectivement 626 et 628 les parties du chariot 62 qui viennent en recouvrement des surfaces 86 et 88. La longueur des parties 526 et 626, d'une part, 528 et 628 d'autre part, mesurée verticalement est telle que les chariots 52 et 62 peuvent se croiser sans interférence.

Dans le mode de réalisation de la figure 4, la structure envisagée pour le deuxième mode de réalisation est tournée de 90° dans le sens horaire autour de l'axe X8. En d'autres termes, le chariot 52 vient en recouvrement partiel de la face latérale gauche 86 et des faces supérieure et inférieure 82 et 84 du rail 8, alors que le chariot 62 vient en recouvrement partiel de la face latérale droite 88 et des faces supérieure et inférieure 82 et 84.

Sur les figures 1 à 4, les chariots 52 et 62 sont représentés coulissants le long de trois faces du rail 8. En variante, ces chariots peuvent coulisser le long de deux faces, voire le long d'une seule de ces faces. Dans ces deux cas, les chariots 52 et 62 peuvent coulisser sur deux côtés adjacents du rail 8.

Dans le mode de réalisation de la figure 5, le rail 8 est à section polygonale en C, c'est-à-dire à section en U à fond plat couchée sur un côté. Le rail 8 définit ainsi un volume intérieur délimité par une face supérieure 83, une face inférieure 85 et une face latérale gauche 87. Le chariot 52 du robot 50 est engagé dans ce volume intérieur et coulisse dans ce volume le long de ses surfaces 83, 85 et 87. En variante, le chariot 52 peut avoir une géométrie telle qu'il ne vient pas simultanément au voisinage des trois surfaces 83, 85 et 87. Il suffit en effet que le chariot 52 coulisse le long d'au moins une face interne du rail 8. Dans ce cas, il circule le long d'une ou de deux surfaces internes du rail 8.

Par ailleurs, le chariot 62 du robot 60 est monté coulissant sur l'extérieur du rail 8 et vient en recouvrement partiel des faces externes supérieure 82, inférieure 84 et latérale gauche 88 du rail 8. En variante, le chariot 62 peut ne coulisser que le long d'une ou de deux de ces surfaces.

On remarque à la figure 5 que l'axe longitudinal X8 du rail 8 est situé dans son volume intérieur.

Selon une variante non représentée de l'invention, le rail 8 pourrait être tourné de 90° vers la gauche par rapport à sa configuration de la figure 5, c'est-à-dire présenter une section en U, avec une ouverture sur le haut. Selon une autre variante, ce rail 8 pourrait être tourné de 90° vers la droite par rapport à la configuration de la figure 5, c'est-à-dire présenter une configuration en U retournée.

Dans les différents modes de réalisation considérés ci-dessus, les chariots 52 et 62 sont montés sur deux côtés opposés ou adjacents du rail, pour limiter les risques d'interférences au croisement, sans pour autant diminuer la taille de ces chariots d'une façon qui pourrait les fragiliser ou rendre les robots 50 et 60 instables.

Dans les modes de réalisation représentés, les chariots 52 et 62 peuvent être inversés. Ainsi, le chariot 52 peut appartenir au robot manipulateur, alors que le chariot 62 appartient au robot de projection.

Selon une variante non représentée de l'invention, applicable à tous les modes de réalisation, l'entraînement des chariots 52 et 62 le long du rail 8 peut être effectué au moyen d'un système à courroie, à chaîne ou à câble.

En variante, le rail 8 peut avoir une section transversale polygonale autre que carrée, par exemple rectangulaire. Dans ce cas, la géométrie des chariots 52 et 62 est adaptée. De façon générale, un chariot recouvre partiellement au moins deux faces adjacentes du rail 8.

En variante, deux ou plus de deux robots de projection 50 et/ou deux ou plus de deux robots manipulateurs 60 peuvent être montés coulissants le long du rail 8.

Les caractéristiques techniques des modes de réalisation et variantes envisagées ci-dessus peuvent être combinées entre elles.

## Revendications

1. Installation (2) de projection de produit de revêtement sur des objets (100), tels que des carrosseries de véhicules automobiles, déplacés par un convoyeur (4) parallèlement à un axe de convoyage (X4) et comprenant au moins une partie de base (102) et une partie (104-106-108) mobile par rapport à la partie de base, cette installation comprenant :
- au moins un premier robot de projection (50) multiaxe, dédié à la projection de produit de revêtement et comprenant un chariot (52) et un bras polyarticulé (54), articulé sur ce chariot par une extrémité proximale et dont l'extrémité opposée au chariot (52) supporte un projecteur (70) de produit de revêtement,
- au moins un robot manipulateur (60) multiaxe, dédié à la manoeuvre d'une partie mobile (104-106- 108) d'un objet (100) à revêtir par rapport à sa partie de base (102) et comprenant un chariot (62) et un bras polyarticulé (64), articulé sur ce chariot par une extrémité proximale et dont l'extrémité opposée au chariot (62) supporte un organe de manipulation (80), chaque robot étant mobile parallèlement à l'axe de convoyage,
- une cabine (3)
- des moyens (36) de ventilation qui assurent un écoulement d'air de ventilation (F1) à l'intérieur de la cabine, selon une direction perpendiculaire à l'axe de convoyage,
**caractérisée en ce que** les chariots (52, 62) des deux robots (50, 60) de projection et manipulateur sont montés coulissants le long d'un même rail (8) parallèle à l'axe de convoyage (X4), avec possibilité de se croiser, alors que ce rail est disposé en amont des objets à revêtir (100), selon la direction de l'écoulement d'air de ventilation (F1) et **en ce que** les deux chariots (52, 62) sont montés sur deux côtés opposés ou adjacents du rail.

2. Installation selon la revendication 1, **caractérisée en ce que** l'écoulement d'air de ventilation (F1) dans la cabine (3) est vertical et descendant, alors que le rail (8) est disposé au-dessus des objets à revêtir (100).

3. Installation selon l'une des revendications précédentes, **caractérisée en ce que** le rail (8) est à section polygonale et chaque chariot (62, 52) coulisse le long d'au moins une face (82,84,86,88 ; 82,83,84,85,87,88) du rail (8).

4. Installation selon la revendication 3, **caractérisée en ce que** le rail (8) est à section carrée ou rectangulaire et **en ce que** les chariots (52, 62) coulissent sur deux côtés opposés du rail.

5. Installation selon la revendication 3, **caractérisée en ce que** le rail (8) est à section en U ou en C et **en ce qu'**un premier chariot (52) appartenant à l'un des robots (50) coulisse le long d'au moins une face interne (83, 85, 87) du rail, alors qu'un deuxième chariot (62) appartenant à l'autre robot (60) coulisse le long d'au moins une face externe (82, 84, 88) du rail.

6. Installation selon l'une des revendications 3 à 5, **caractérisé en ce que** l'un au moins des chariots (56, 62) coulisse le long d'au moins deux faces adjacentes (82,84,86,88 ; 82,83,84,85,87,88) du rail (8).

7. Installation selon l'une des revendications 3, 4 ou 6 **caractérisée en ce que** le rail (8) comprend au moins une face (82 ; 86,88 ; 82,84) le long de laquelle coulissent une partie (522 ; 526, 528) du chariot (52) du robot de projection (50) et une partie (622 ; 626, 628) du chariot (62) du robot manipulateur (60).

8. Installation selon l'une des revendications précédentes, **caractérisée en ce que** chaque chariot (52, 62) est entraîné en déplacement le long du rail par un moteur équipé d'un pignon engrenant sur une crémaillère.

9. Installation selon l'une des revendications 1 à 7, **caractérisée en ce que** chaque chariot (52, 62) est entraîné en déplacement le long du rail par un système de transmission à courroie, à chaîne ou à câble.

## Patentansprüche

1. Anlage (2) zum Spritzen von Beschichtungsmaterial auf Objekte (100), wie Karosserien von Fahrzeugen, die von einer Fördervorrichtung (4) parallel zu einer Förderachse (X4) bewegt werden und mindestens ein Basisteil (102) und ein in Bezug auf das Basisteil bewegliches Teil (104-106-108) umfassen, wobei die Anlage umfasst:
- mindestens einen ersten mehrachsigen Spritzroboter (50), der dem Spritzen von Beschichtungsmaterial gewidmet ist und einen Wagen (52) und einen mehrgelenkigen Arm (54) aufweist, der an diesem Wagen über ein proximales Ende angelenkt ist und dessen dem Wagen (52) entgegengesetztes Ende eine Spritzvorrichtung (70) für Beschichtungsmaterial trägt,
- mindestens einen mehrachsigen Handhabungsroboter (60), der dem Betätigen eines mobilen Teils (104-106-108) eines zu beschichtenden Objekts (100) in Bezug auf sein Basisteil (102) gewidmet ist und einen Wagen (62) und einen mehrgelenkigen Arm (64) umfasst, der an diesem Wagen durch ein proximales Ende angelenkt ist und dessen dem Wagen (62) entgegengesetzten Ende ein Handhabungselement (80) trägt, wobei jeder Roboter parallel zur Förderachse beweglich ist,
- eine Kabine (3)
- Mittel (36) zur Belüftung, die eine Strömung (F1) von Belüftungsluft im Inneren der Kabine gemäß einer Richtung senkrecht zur Förderachse sicherstellen,
**dadurch gekennzeichnet, dass** die Wagen (52, 62) der zwei Roboter (50, 60) zum Spritzen und zur Handhabung verschiebbar entlang einer selben Schiene (8) parallel zur Förderachse (X4) mit der Möglichkeit, sich zu kreuzen montiert sind, wobei diese Schiene gemäß der Richtung der Strömung (F1) der Belüftungsluft stromaufwärts zu den zu beschichtenden Objekten (100) angeordnet ist, und dass die zwei Wagen (52, 62) auf zwei gegenüberliegenden oder benachbarten Seiten der Schiene montiert sind.

2. Anlage nach Anspruch 1, **dadurch gekennzeichnet, dass** die Strömung (F1) der Belüftungsluft in der Kabine (3) senkrecht und abfallend ist, wobei die Schiene (8) über den zu beschichtenden Objekten (100) angeordnet ist.

3. Anlage nach einem der vorhergehenden Ansprüche, **dadurch gekennzeichnet, dass** die Schiene (8) einen polygonalen Querschnitt aufweist und jeder Wagen (62, 52) entlang mindestens einer Seite (82, 84, 86, 88; 82, 83, 84, 85, 87, 88) der Schiene (8) gleitet.

4. Anlage nach Anspruch 3, **dadurch gekennzeichnet, dass** die Schiene (8) einen quadratischen oder rechteckigen Querschnitt aufweist und dass die Wagen (52, 62) auf zwei gegenüberliegenden Seiten der Schiene gleiten.

5. Anlage nach Anspruch 3, **dadurch gekennzeichnet, dass** die Schiene (8) einen U-förmigen oder C-förmigen Querschnitt aufweist, und dass ein erster Wagen (52), der zu einem der Roboter (50) gehört, entlang mindestens einer Innenseite (83, 85, 87) der Schiene gleitet, während ein zweiter Wagen (62), der zu dem anderen Roboter (60) gehört, entlang mindestens einer Außenfläche (82, 84, 88) der Schiene gleitet.

6. Anlage nach einem der Ansprüche 3 bis 5, **dadurch gekennzeichnet, dass** mindestens einer der Wagen (56, 62) entlang mindestens zweier benachbarter Seiten (82, 84, 86, 88; 82, 83, 84, 85, 87, 88) der Schiene (8) gleitet.

7. Anlage nach einem der Ansprüche 3, 4 oder 6, **dadurch gekennzeichnet, dass** die Schiene (8) mindestens eine Seite (82; 86, 88; 82, 84) umfasst, entlang der ein Teil (522, 526, 528) des Wagens (52) des Spritzroboters (50) und ein Teil (622; 626, 628) des Wagens (62) des Handhabungsroboters (60) gleiten.

8. Anlage nach einem der vorhergehenden Ansprüche, **dadurch gekennzeichnet, dass** jeder Wagen (52, 62) zur Verschiebung entlang der Schiene durch einen Motor angetrieben wird, der mit einem Ritzel ausgerüstet ist, der mit einer Zahnstange im Eingriff ist.

9. Anlage nach einem der Ansprüche 1 bis 7, **dadurch gekennzeichnet, dass** jeder Wagen (52, 62) zur Verschiebung entlang der Schiene durch ein Band-, Ketten- oder Kabelfördersystem angetrieben wird.

## Claims

1. An installation (2) for spraying a coating product on objects (100), such as motor vehicle bodies, moved by a conveyor (4) parallel to a conveying axis (X4) and comprising at least a base part (102) and a part (104-106-108) moving relative to the base part, said installation comprising:
- at least a first multi-axis spraying robot (50), dedicated to spraying a coating product and comprising a carriage (52) and a polyarticulated arm (54) hinged on this carriage by a proximal end and wherein the end opposite the carriage bears a coating product sprayer (70),
- at least one multi-axis handling robot (60), dedicated to maneuvering a moving part (104-106-108) of an object (100) to be coated relative to its base part (102), each robot being movable parallel to the conveying axis and comprising a carriage (62) and a polyarticulated arm (64) hinged on this carriage by a proximal end and wherein the end opposite the carriage bears a handling member (80),
- a booth (3),
- ventilation means (36) that ensure a flow of ventilation air (F1) inside the booth, in a direction perpendicular to the conveying axis,
**characterized in that** the carriages (52, 62) of the two spraying and handling robots (50, 60) are mounted sliding along a same rail (8) parallel to the conveying axis (X4), and are able to pass one another, while that rail is positioned upstream from the object to be coated (100), in the flow direction of the ventilation air (F1) and **in that** the two carriages (52, 62) are mounted on two opposite or adjacent sides of the rail.

2. The installation according to claim 1, **characterized in that** the flow of ventilation air (F1) in the booth (3) is vertical and downward, while the rail (8) is positioned above the objects to be coated (100).

3. The installation according to any one of the preceding claims, **characterized in that** the rail (8) has a polygonal section and each carriage (62, 52) slides along at least one surface (82, 84, 86, 88; 82, 83, 84, 85, 87, 88) of the rail (8).

4. The installation according to claim 3, **characterized in that** the rail (8) has a square or rectangular section and **in that** the carriages (52, 62) slide on two opposite sides of the rail.

5. The installation according to claim 3, **characterized in that** the rail (8) has a U- or C-shaped section and **in that** a first carriage (52) belonging to one of the robots (50) slides along at least one inner surface (83, 85, 87) of the rail, while a second carriage (62) belonging to the other robot (60) slides along at least one outer surface (82, 84, 88) of the rail.

6. The installation according to one of claims 3 to 5, **characterized in that** at least one of the carriages (56, 62) slides along at least one of the two adjacent surfaces (82, 84, 86, 88; 82, 83, 84, 85, 87, 88) of the rail (8).

7. The installation according to one of claims 3, 4 or 6, **characterized in that** the rail (8) comprises at least one surface (82; 86, 88; 82, 84) along which part (522; 526; 528) of the carriage (52) of the spraying robot (50) and part (622; 626, 628) of the carriage (62) of handling robot (60) slide.

8. The installation according to any one of the preceding claims, **characterized in that** each carriage (52, 62) can be moved along the rail by a motor equipped with a pinion meshing with a rack.

9. The installation according to one of claims 1 to 7, **characterized in that** each carriage (52, 62) can be moved along the rail by a belt, chain or cable transmission system.
